# EUROPEAN PATENT APPLICATION

(11) **EP 4 800 542 A1**
(43) Date of publication of application: **02.09.2026**
(21) Application number: 24927625.4
(22) Date of filing: 30.09.2024
(51) Int. Cl.: G06F 8/30

(54) **METHOD AND APPARATUS FOR APPLICATION DEVELOPMENT, AND DEVICE AND PRODUCT**

(71) Applicant: Beijing Zitiao Network Technology Co., Ltd., Beijing 100190 (CN)
(72) Inventor: WANG, Jingxuan, Beijing 100028 (CN); LIU, Jiapeng, Beijing 100028 (CN)
(74) Representative: Marks & Clerk LLP
(86) International application number: PCT/CN2024/122971
(87) International publication number: WO 2026/065485

(57) **Abstract**

The present disclosure provides a method and an apparatus for application development, a computing device, a computer readable storage medium, and a computer program product. The method includes: generating, based on a workflow of a visual application orchestrated on a no-code or low-code platform, a first domain-specific language file associated with the no-code or low-code platform; generating, based on the first domain-specific language file, first executable code of the application; and using the first executable code in an integrated development environment for application development.

## Description

### FIELD

The present disclosure relates to the technical field of computers, and more specifically, to a method and an apparatus for application development, a computing device, a computer readable storage medium, and a computer program product.

### BACKGROUND

Nowadays, when an application related to a generative model is being developed, some mainstream development frameworks are typically needed to orchestrate encapsulated nodes and edges into a graph, to describe service logic as well as calling and dependence relationships between nodes.

No-code or low-code platforms, a type of application development tool, allow non-developers, or even users having little knowledge about programming, to quickly build applications by dragging components, configuring parameters, and the like, through a visual interface and pre-built modules, with no or little effort in coding. In additional, having grasped some knowledge about the frameworks, professional developers can also use a related no-code or low-code platform to quickly build a Demo application for Proof of Concept (POC).

Domain-Specific Language (DSL), a language designed for a specific domain, focuses on solving specific problems in the field and provides syntax and semantics closely related to the field. DSL files typically include code, declarations, rules, or configurations written using the DSL. Those files can be processed by specific tools, compilers, or interpreters, to generate code, perform computing, verify rules, configure systems, or the like.

### SUMMARY

In view of the above, the present disclosure provides a method and an apparatus for application development, a computing device, a computer readable storage medium, and a computer program product, where a visual workflow of the zero or low platform can be converted into a domain-specific language file, and the domain-specific language file can then be converted into executable code, thereby supporting developers to orchestrate the workflow using the no-code or low-code platform and then export the same as a full-code project for in-depth full-code development.

In a first aspect of the present disclosure, there is provided a method for application development, comprising: generating, based on a workflow of a visual application orchestrated on a no-code or low-code platform, a first domain-specific language file associated with the no-code or low-code platform; generating, based on the first domain-specific language file, first executable code of the application; and using the first executable code in an integrated development environment for application development.

In a second aspect of the present disclosure, there is provided an apparatus for application development, comprising: a first domain-specific language file generation unit configured to generate, based on a workflow of a visual application orchestrated on a no-code or low-code platform, a first domain-specific language file associated with the no-code or low-code platform; a first executable code generation unit configured to generate, based on the first domain-specific language file, first executable code of the application; and an application development unit configured to use the first executable code in an integrated development environment for application development.

In a third aspect of the present disclosure, there is provided a computing device, comprising: at least one processing unit; and at least one memory coupled to the at least one processing unit and storing instructions executable by the at least one processing unit, wherein the instructions, when executed by the at least one processing unit, cause the computing device to perform the method in the first aspect of the present disclosure.

In a fourth aspect of the present disclosure, there is provided a non-transitory computer storage medium, comprising machine-executable instructions that, when executed by a device, cause the device to perform the method in the first aspect of the present disclosure.

In a fifth aspect of the present disclosure, there is provided a computer program product comprising machine-executable instructions that, when executed by a device, cause the device to perform the method in the first aspect of the present disclosure.

It would be appreciated that the Summary is not intended to identify key features or essential features of the present disclosure, nor is it intended to be used to limit the scope of the present disclosure. Other features of the present disclosure will be made apparent through the following description.

### BRIEF DESCRIPTION OF THE DRAWINGS

With reference to the following detailed description of the accompanying drawings, the above and other objectives, features, and advantages of the embodiments of the present disclosure will be made clearer. In the drawings, a plurality of embodiments of the present disclosure are depicted in an exemplary, but nonlimiting, manner, where:
Fig. 1 illustrates a schematic diagram of an example environment in which embodiments of the present disclosure can be implemented;
Fig. 2 illustrates a schematic flowchart of a method for application development according to embodiments of the present disclosure;
Fig. 3 illustrates a schematic flowchart of generating a full-code project from a visual graphical representation according to embodiments of the present disclosure;
Fig. 4 illustrates a schematic flowchart of a node for applying full-code development on a no-code or low-code platform according to embodiments of the present disclosure;
Fig. 5 illustrates a block diagram of an apparatus for application development according to embodiments of the present disclosure; and
Fig. 6 illustrates a block diagram of an electronic device according to embodiments of the present disclosure.

Throughout the drawings, the same or similar reference numerals represent the same or similar elements.

### DETAILED DESCRIPTION OF EMBODIMENTS

Reference below will be made to describe the embodiments of the present disclosure in detail. Although some embodiments of the present disclosure are depicted in the drawings, it would be appreciated that the present disclosure could be implemented in various forms and should not be construed as being restricted to the embodiments described herein. Rather, those embodiments are provided to enable a more thorough and complete understanding of the present disclosure. It is to be understood that the drawings and embodiments of the present disclosure are provided only exemplarily, rather than suggesting any limitation to the protection scope of the present disclosure.

As described herein, the term "includes" or similar expressions are to be read as open-ended terms that mean "includes, but is not limited to." The term "based on" is to be read as "based at least in part on." The term "an embodiment" or "the embodiment" is to be read as "at least one embodiment." The terms "first," "second," and the like may refer to different objects or the same object unless explicitly indicated otherwise. Other definitions, explicit and implicit, may be included below.

As mentioned above, the no-code or low-code platform can allow professional developers to quickly build Demo for proof of concept. However, after performing the proof of concept, the professional developers generally need to continue to develop a system with more complicated service logic and more robust performance in full code in an Integrated Development Environment (IDE), but the no-code or low-code platform cannot covert the built Demo into real, executable code. Therefore, the professional developers have to restart coding and application building, which seriously affecting the development efficiency.

In addition, although the no-code or low-code platform allows the non-professional developers to conveniently build an application, it may not be able to support the implementation of new demands if the non-professional developers have more demands for expansion. Therefore, the professional developers are required to develop a corresponding custom node by coding in the IDE, so as to increase the upper limit of complexity of the application that can be built. In the case, the professional developers typically need to learn the domain-specific language defined by the no-code or low-code platform before starting the development, resulting in low efficiency.

In order to address or alleviate the above-mentioned problem and/or other potential problems, the embodiments of the present disclosure provide a method for application development. By converting a visual workflow into a domain-specific language file and then converting the domain-specific language file into executable code, the method can support developers to orchestrate the workflow using the no-code or low-code platform and then export the same as a full-code project for in-depth full-code development.

Reference below will be made to describe the basic principle and implementations of the present disclosure. It would be appreciated that the example embodiments are provided to enable those skilled in the art to better understand and further implement embodiments of the present disclosure, rather than suggesting any limitation to the scope of the present disclosure.

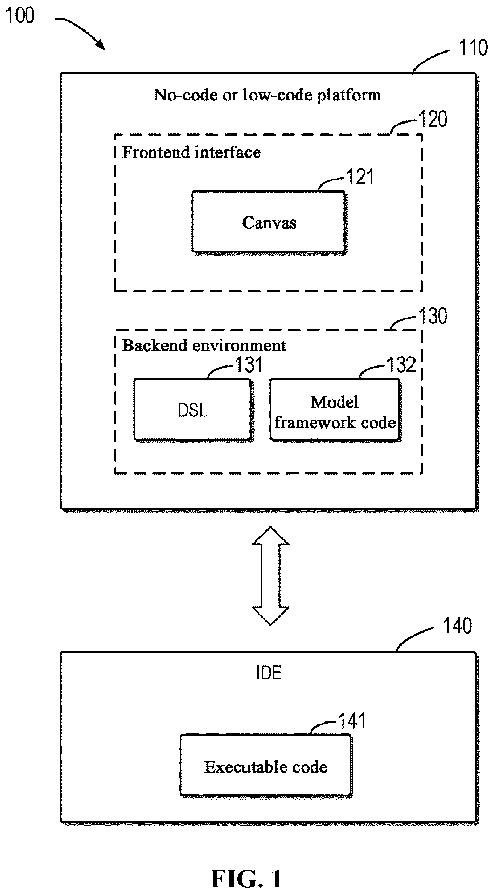

Fig. 1 illustrates a schematic diagram of an environment 100 where a plurality of embodiments of the present disclosure can be implemented. As shown therein, the environment 100 may include a no-code or low-code platform 110, and an Integrated Development Environment (IDE) 140. Wherein, the no-code or low-code platform 110 is targeted at professional and non-professional developers and applied to visual application development, while the IDE 140 is oriented to the professional developers and used for full-code application development. The no-code or low-code platform 110 may include a frontend interface 120, and a backend environment 130. The frontend interface 120 is displayed on a terminal interface used by a user for application development, which is directly visible to the user; the backend environment 130 is typically deployed in a server or cloud environment, which is invisible to the user.

The frontend interface 120 is responsible for displaying the interface of the no-code or low-code platform to the user, including a layout and a style of various graphs, charts, sheets, buttons, and other elements, and processing user's inputs and operations, for example, clicking, dragging, zooming, and the like, while providing timely feedback about corresponding results or changes to the user. As shown in Fig. 1, the frontend interface 120 may include a canvas 121. The workflow of the application visually developed using the no-code or low-code platform 110 can be presented on the canvas 121 in a visual graphical representation such as a topology diagram. It would be appreciated that the form of the visual graphical representation of the workflow of the application is not limited herein. In some embodiments, the user can perform operations (e.g. zooming in, zooming out, dragging, and the like) on the canvas 121, to view information of the visual graphical representation of the workflow on the canvas 121.

The backend environment 130 is mainly responsible for processing tasks such as service logic, data storage, system integration, and the like, and processing data by receiving a data request sent by the frontend interface 120, to meet the display need of the frontend interface 120. As shown in Fig. 1, the backend environment 130 may include a Domain-Specific Language file (DSL) 131, and model framework code 132. The model framework code 132 is developed by the developer of the no-code or low-code platform, and converted into the DSL 131 according to the custom protocol. Then, the visual graphical representation of the workflow in the canvas 121 can be generated conveniently based on the DSL 131.

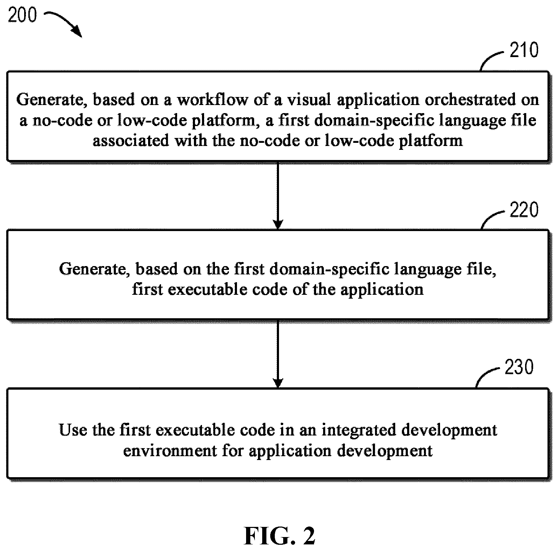

As shown in Fig. 1, the IDE 140 may include executable code 141. The IDE 140 typically has a complier built therein, or can call an external complier, to compile the executable code 141 into an executable file. The IDE 140 can also have functions of debugging, running, deployment, and the like, to enable the developer to conveniently create, test, and manage the executable code 141. In the present disclosure, mutual conversion between the visual graphical representation of the workflow in the canvas 121 and the executable code 141 in the IDE 140 is implemented, to support users of the no-code or low-code platform to perform in-depth development. Hereinafter, reference will be made to Fig. 2 to further describe the process of implementing the application development method according to the present disclosure.

Fig. 2 illustrates a schematic flowchart of a method 200 for application development according to embodiments of the present disclosure. In some embodiments, the method 200 can be implemented by, for example, a function plug-in on the no-code or low-code platform 110 as shown in Fig. 1. It would be appreciated that the method 200 may further include additional actions not shown, and/or may omit the shown actions. The scope of the present disclosure is not limited in the aspect.

As shown therein, in block 210, the method 200 may include: generating, based on a workflow of a visual application orchestrated on a no-code or low-code platform, a first domain-specific language file associated with the no-code or low-code platform. In some embodiments, the user can first adjust the visual graphical representation of the workflow of the application on the no-code or low-code platform through dragging or the like, so as to complete initial development for the application. Wherein, the visual graphical representation of the workflow may include node information and edge information of the workflow.

The node can represent any entity or object (e.g. a class, function, variable, module, component, and the like) capable of executing some logic, which may include basic attributes such as a node name, a node type, a node input parameter declaration, a node output parameter declaration, and the like. In the canvas 121, the node can be represented in the form of a functional block diagram. At the initial development stage of the application, the user can select a node module corresponding to the specific function and add the same to the canvas 121, then fill the node module with the attributes such as a name, a type, an input/output parameter type, and the like, of the node module. For example, if the user adds a node module for sorting to the canvas 121, the user can specify a sorting rule (e.g. an ascending or descending order) and the output result type (e.g. an array, or a character string) in the node module.

An edge which is a data structure (e.g. an adjacency matrix, an adjacency list, or the like) represents a relationship or interaction between a data flow and an execution order of the nodes, and may include basic attributes such as an edge type, a start node name, an end node name, and the like. In the canvas 121, the edge may be represented in the form of a directed or undirected connection line. At the initial development stage of the application, after selecting a plurality of node modules, the user can add connection lines between node modules, to indicate the execution order and logic of the node modules (e.g. sequential, parallel, or branching).

In some embodiments, the function plug-in of the no-code or low-code platform can obtain node information and edge information of the workflow of the application, and then generate a first domain-specific language file based on the obtained node information and edge information. An example first domain-specific language file may be presented in the following form:

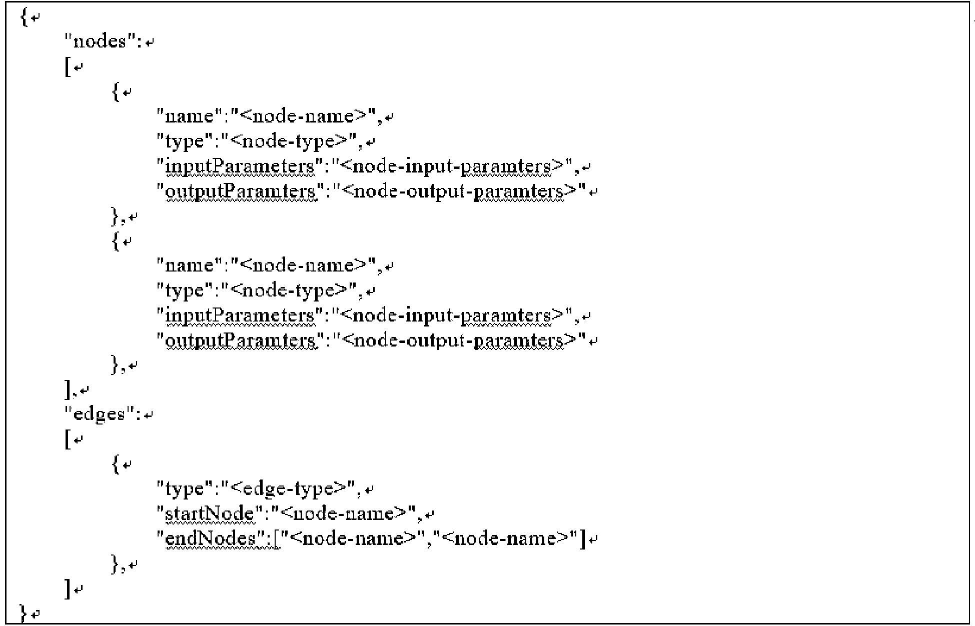

Wherein, the respective attributes of the node are explained below:

**Table 1**

| attribute | yes/no (required) | description |
|---|---|---|
| name | yes | node name (default mode: parents delegation compilation priority: system>user-defined) |
| type | no | node type (e.g. ChatModel, PromptTemplate, Knowledge, VectorStore, IDP, Embedding, and the like) |
| inputParameters | no | node input parameter declaration |
| outputParamters | no | node output parameter declaration |

The respective attributes of the edge are explained below:

**Table 2**

| attribute | yes/no (required) | description |
|---|---|---|
| type | yes | edge type (e.g. Branch, Chain, Parallel) |
| startNode | yes | name of start node |
| endNodes | yes | name of end node |

In block 220, the method 200 may include: generating, based on the first domain-specific language file, first executable code of the application. As shown above, in the first domain-specific language file, the node information and the edge information of the workflow of the application have been recorded in a structured manner. In some embodiments, the function plug-in of the no-code or low-code platform can obtain the node information and the edge information from the first domain-specific language file, and then generate first executable code based on the obtained node information and edge information.

In block 230, the method 200 may include: using the first executable code in an integrated development environment for application development. Therefore, the user can use the visual graphical representation of the workflow of the application to represent the executable node obtained through DSL language conversion, and switch from the zero or code platform to the IDE to continue full-code in-depth development, which is free from the limitations on the functions and number of node modules in the no-code or low-code platform.

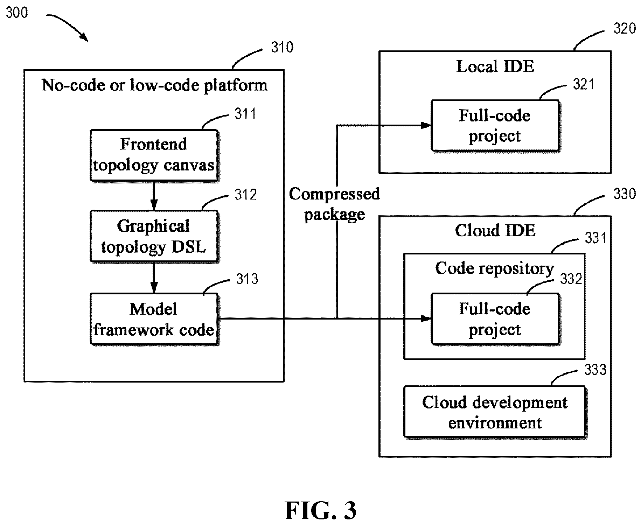

Fig. 3 illustrates a schematic flowchart 300 of generating a full-code project from a visual graphical representation according to embodiments of the present disclosure. As shown therein, on the no-code or low-code platform 310, conversion from a frontend topology canvas 311 to a graphical topology DSL 312 can be implemented by, for example, a function plug-in. Wherein, the function plug-in can identify node information and edge information of the workflow of the application included in the frontend topology canvas 311, and record the node information and the edge information in a structured manner according to a custom conversion protocol, to generate the graphical topology DSL 312. Subsequently, the function plug-in can extract the node information and the edge information of the workflow from the graphical topology DSL 312, to generate model framework code 313 executable in the IDE.

With the executable model framework code 313, the user can input it into the local IDE 320 in the form of a compressed package, so as to perform in-depth development of the full-code project 332. Wherein, the local IDE 320 refers to an integrated development environment installed on a local computer, which integrates multiple functions of, for example, code writing debugging, compiling, running, and the like, to provide a complete development platform for the developer. The cloud IDE 330 is a cloud tool that can be accessed through a browser, without requiring a local environment, to achieve acquisition of the cloud development environment 333, code writing, compilation and debugging, run preview, access to a code repository, command line execution, and the like. It allows the developers to perform software development in the cloud, without installing and configuring a complex development environment on the local computer.

In order to enable the professional developers to use the no-code or low-code platform, without spending the costs for learning the specific DSL of the no-code or low-code platform in the case that new demands cannot be supported when the non-professional developers are using the no-code or low-code platform, in some embodiments, a second domain-specific language file can be generated based on second executable code associated with the custom node. Next, a visual graphical representation of the custom node is generated based on the second domain-specific language file. By adding the visual graphical representation of the custom node to the no-code or low-code platform, the user can easily orchestrate the workflow of the application, to continue with the application development.

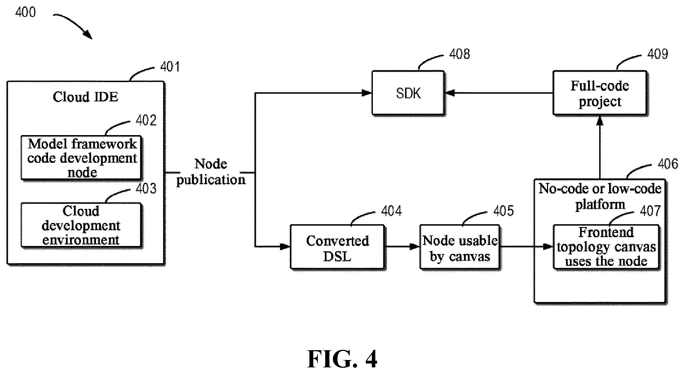

Fig. 4 illustrates a schematic diagram 400 of a node for applying full-code development to a no-code or low-code platform according to embodiments of the present disclosure. As shown therein, in some embodiments, the user can develop one or more model framework code development nodes 402 in full code for the no-code or low-code platform in a cloud development environment in a cloud IDE 403, which can be applied to the workflow of the application initially developed on the no-code or low-code platform, and can meet specific functional demands. Then, the user can publish the developed model framework development node 402. At this time, the no-code or low-code platform 406 cannot directly use the node, because the no-code or low-code platform 406 performs visual development using the frontend topology canvas but the full-code developed model framework code development node 402 cannot directly convert executable code into the visual graphical representation. In some embodiments, in step 404, the executable code of the model framework code development node 402 can be converted into a structuralized DSL file, to record the crucial node information and edge information that form the workflow. Subsequently, a node 405 that can be used by the canvas in the no-code or low-code platform 406 can be generated, based on the structuralized DSL file. In step 407, the user of the no-code or low-code platform 406 can select and configure the node 405 in the frontend topology canvas by dragging or the like, as in the initial development stage, to implement the in-depth development of the application.

In some embodiments, a Software Development Kit (SDK) can be generated based on third executable code associated with the custom node, and the user can also perform in-depth application development by depending on and consuming the SDK in the first executable code. The SDK is a set of software tools, library files, documents, and example code, which can provide developers with interfaces, tools and resources necessary for developing a specific software application. Depending on and consuming the SDK refers to a process where the developers download, input and use the functions and interfaces provided by the SDK to build an application during development.

As shown in Fig. 4, the professional developers can use the node developed in full code to generate a corresponding SDK, rather than converting it into a visual node in the no-code or low-code platform 406. The user who has completed the initial application development stage using the no-code or low-code platform 406 can convert the visual workflow into an executable full-code project 409 following the method 200, and then depend on and consume the SDK in the full-code project 409. In this way, the in-depth application development can also be completed.

The example embodiments of the present disclosure have been described above with reference to Figs. 1-4. By converting a visual workflow into a domain-specific language file and then converting the domain-specific language file into executable code, the application development solution according to the present application can support developers to orchestrate the workflow using the no-code or low-code platform and then export the same as a full-code project for in-depth full-code development.

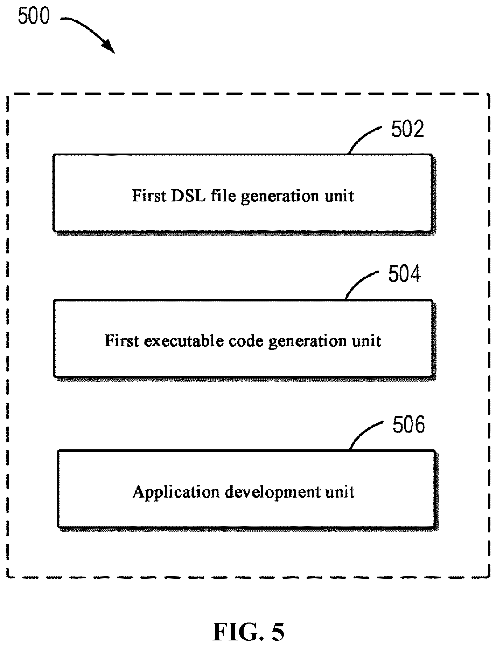

Fig. 5 illustrates a schematic block diagram of an apparatus 500 for application development according to embodiments of the present disclosure. As shown therein, the apparatus 500 includes: a first domain-specific language file generation unit 510, a first executable code generation unit 520, and an application development unit 530.

In some embodiments, the first domain-specific language file generation unit 510 is configured to generate, based on a workflow of a visual application orchestrated on a no-code or low-code platform, a first domain-specific language file associated with the no-code or low-code platform; the first executable code generation unit 520 is configured to generate, based on the first domain-specific language file, first executable code of the application; and the application development unit 530 is configured to use the first executable code in an integrated development environment for application development.

In some embodiments, the first domain-specific language file generation unit 510 is further configured to: obtain node information and edge information of the workflow of the application; and generate, based on the node information and the edge information, the first domain-specific language file.

In some embodiments, the first domain-specific language file generation unit 510 is further configured to: obtain the node information and the edge information from the first domain-specific language file; and generate the first executable code based on the node information and the edge information.

In some embodiments, the apparatus 500 further includes a workflow orchestration unit configured to: generate, based on second executable code associated with a custom node, a second domain-specific language file; generate, based on the second domain-specific language file, a visual graphical representation of the custom node; and orchestrate the workflow of the application by adding the visual graphical representation of the custom node to the no-code or low-code platform.

In some embodiments, the workflow orchestration unit is further configured to: generate, based on a third executable code associated with the custom node, a software development kit; and orchestrate the workflow of the application by depending on and consuming the software development kit in the first executable code.

In some embodiments, the apparatus 500 further includes an initial application development unit configured to perform initial application development by adjusting a visual graphical representation of the workflow.

In some embodiments, the application comprises a generative model application.

It is worth noting that more actions or steps as shown in Figs. 1-4 can be implemented by the apparatus 500 as shown in Fig. 5. For example, the apparatus 500 may include more modules or units to implement the actions or steps described above, or some units or modules shown in Fig. 5 can be further configured to implement the actions or steps described above. Details are omitted here for brevity.

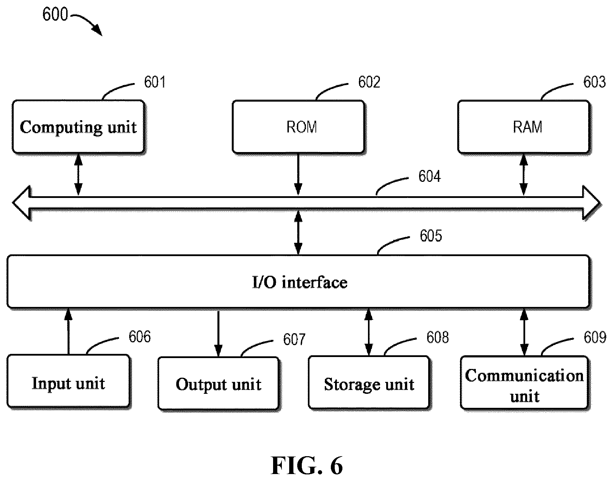

Fig. 6 illustrates an example block diagram of an example device 600 that can implement embodiments of the present disclosure. As shown therein, the device 600 may include a computing unit 601 which can execute various actions and processing based on programs stored in a Read Only Memory (ROM) 602 or a program loaded from a storage unit 606 to a Random Access Memory (RAM) 603. RAM 603 stores therein various programs and data required for operations of the device 600. The computing unit 601, the ROM 602, and the RAM 603 are connected to one another via a bus 604. An input/output (I/O) interface 605 is also connected to the bus 604.

A plurality of components in the device 600 may be connected to the I/O interface 605, including: an input unit 606 including, for example, a keyboard, a mouse, and the like; an output unit 607 including various types of displays, loudspeakers, and the like; a storage unit 608 including, for example, a magnetic disk, a compact disc, or the like; and a communication unit 609, for example, a network card, a modem, a wireless communication transceiver, or the like. The communication unit 609 can allow the device 600 to exchange information/data with other devices through a computer network such as Internet, and/or various kinds of telecommunication networks.

The computing unit 601 may be various types of general purpose and/or specific purpose processing components having a processing and computing capability. Some examples of the computing unit 601 include, but are not limited to, a Central Processing Unit (CPU), a Graphics Processing Unit (GPU), various types of specific-purpose Artificial Intelligence (AI) computing chips, various types of computing units having machine learning model algorithms run thereon, a Digital Signal Processor (DSP), any appropriate processor, controller, microcontroller, or the like. The computing unit 601 can execute various methods and processing described above, for example, the method 200. For example, the method 200 may be implemented as computer software programs that are tangibly included in a machine readable medium, e.g., the storage unit 608. In some embodiments, part or all of the computer programs may be loaded and/or mounted onto the device 600 via ROM 602 and/or communication unit 609. When the computer program is loaded to the RAM 603 and executed by the computing unit 601, one or more steps of the method 200 as described above may be executed. Alternatively, in other embodiments, the computing unit 601 may be configured in any other appropriate manners (for example, by means of firmware) to perform the method 200.

In some embodiments, the method and process described above may be implemented as a computer program product. The computer program product may include a computer readable storage medium having stored thereon computer readable program instructions for performing various aspects of the present disclosure.

The computer readable storage medium may be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a Random Access Memory (RAM), a Read-Only Memory (ROM), an Erasable Programmable Read-Only Memory (EPROM or Flash memory), a Static Random Access Memory (SRAM), a portable Compact Disc Read-Only Memory (CD-ROM), a Digital Versatile Disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals sent through a wire.

Computer readable program instructions described herein can be downloaded to corresponding computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the corresponding computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a Local Area Network (LAN) or a Wide Area Network (WAN), or the connection may be made to an external computer (for example, through the Internet using an Internet Service Provider). In some embodiments, electronic circuitry including, for example, programmable logic circuitry, Field-Programmable Gate Arrays (FPGAs), or Programmable Logic Arrays (PLAs) may execute the computer readable program instructions by utilizing state information of the computer readable program instructions to personalize the electronic circuitry, in order to perform aspects of the present disclosure.

These computer readable program instructions may be provided to a processing unit of a general purpose computer, special purpose computer, or other programmable data processing device to produce a machine, such that the instructions, when executed via the processing unit of the computer or other programmable data processing device, create apparatuses for implementing the functions/actions specified in the flowchart and/or block diagram block or blocks. These computer readable program instructions may also be stored in a computer readable storage medium that can direct a computer, a programmable data processing device, and/or other devices to function in a particular manner, such that the computer readable storage medium having instructions stored thereon includes an article of manufacture including instructions which implement aspects of the functions/actions specified in the flowchart and/or block diagram block or blocks.

The computer readable program instructions may also be loaded onto a computer, other programmable data processing devices, or other devices to cause a series of operational steps to be performed on the computer, other programmable devices or other devices to produce a computer implemented process, such that the instructions which are executed on the computer, other programmable devices, or other devices implement the functions/actions specified in the flowchart and/or block diagram block or blocks.

The flowchart and block diagrams illustrate the architecture, functionality, and operation of possible implementations of systems, methods and computer program products according to various embodiments of the present disclosure. In this regard, each block in the flowchart or block diagrams may represent a module, snippet, or portion of code, which includes one or more executable instructions for implementing the specified logical function(s). In some alternative implementations, the functions noted in the block may occur out of the order noted in the images. For example, two blocks in succession may, in fact, be executed substantially concurrently, or the blocks may sometimes be executed in the reversed order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or actions, or combinations of special purpose hardware and computer instructions.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method for application development, comprising:
generating, based on a workflow of a visual application orchestrated on a no-code or low-code platform, a first domain-specific language file associated with the no-code or low-code platform;
generating, based on the first domain-specific language file, first executable code of the application; and
using the first executable code in an integrated development environment for application development.

2. The method of claim 1, wherein generating the first domain-specific language file associated with the no-code or low-code platform comprises:
obtaining node information and edge information of the workflow of the application; and
generating, based on the node information and the edge information, the first domain-specific language file.

3. The method of claim 1, wherein generating the first executable code of the application comprises:
obtaining the node information and the edge information from the first domain-specific language file; and
generating the first executable code based on the node information and the edge information.

4. The method of claim 1, further comprising:
generating, based on second executable code associated with a custom node, a second domain-specific language file;
generating, based on the second domain-specific language file, a visual graphical representation of the custom node; and
orchestrating the workflow of the application by adding the visual graphical representation of the custom node to the no-code or low-code platform.

5. The method of claim 1, further comprising:
generating, based on a third executable code associated with the custom node, a software development kit; and
orchestrating the workflow of the application by depending on and consuming the software development kit in the first executable code.

6. The method of claim 1, further comprising:
performing initial application development by adjusting a visual graphical representation of the workflow.

7. The method of claim 1, wherein the application comprises a generative model application.

8. A system for application development, comprising:
a first domain-specific language file generation unit configured to generate, based on a workflow of a visual application orchestrated on a no-code or low-code platform, a first domain-specific language file associated with the no-code or low-code platform;
a first executable code generation unit configured to generate, based on the first domain-specific language file, first executable code of the application; and
an application development unit configured to use the first executable code in an integrated development environment for application development.

9. A computing device, comprising:
at least one processing unit; and
at least one memory coupled to the at least one processing unit and storing instructions executable by the at least one processing unit, wherein the instructions, when executed by the at least one processing unit, cause the computing device to perform the method of any of claims 1-7.

10. A computer storage medium comprising machine-executable instructions that, when executed by a device, cause the device to perform the method of any of claims 1-7.

11. A computer program product comprising machine-executable instructions that, when executed by a device, cause the device to perform the method of any of claims 1-7.
